# EUROPEAN PATENT SPECIFICATION

(11) **EP 3 171 574 B1**
(45) Date of publication and mention of the grant of the patent: **26.12.2018**
(21) Application number: 16189185.8
(22) Date of filing: 16.09.2016
(51) Int. Cl.: H04L 29/08

(54) **ASSISTANT DATA TRANSMISSION METHOD**
ASSISTENTEN-DATENÜBERTRAGUNGSVERFAHREN
PROCÉDÉ D'ASSISTANCE DE TRANSMISSION DE DONNÉES

(30) Priority: 18.11.2015 TW 104138118
(43) Date of publication of application: 24.05.2017
(73) Proprietor: Walton Advanced Engineering Inc., Kaohsiung City 80681 (TW)
(72) Inventor: YU, Hong-Chi, 80681 Kaohsiung City (TW); CHANG, Mao-Ting, 80681 Kaohsiung City (TW)
(74) Representative: Viering, Jentschura & Partner mbB Patent- und Rechtsanwälte

(56) References cited:
- WO-A2-2011/119793
- US-A1- 2015 113 110
- US-B1- 7 558 862
- US-B1- 9 083 718

## Description

### BACKGROUND OF THE INVENTION

### 1) Field of the Invention

The present disclosure relates to a peer-to-peer data transmission method, particularly an assistant data transmission method after failure of initial data exchange; in the assistant data transmission method, peer-to-peer data exchange is enabled with a router under support of a server when traditional peer-to-peer data exchange between client sides behind routers and without realistic network locations is rejected by routers due to safety concerns.

### 2) Description of the Prior Art

All kinds of applications which are booming with the Internet quickly developed in recent years influence people's life styles deeply, for example, data exchange, e-mail, video conference/surveillance, real-time communications, streaming media, etc.

In this regard, it is predicted that the mode of data exchange will evolve into Internet of Things (IoT) in the future from peer to peer (P2P) for exchange of a great quantity of data or simple individual or commercial data exchange at a fixed site in the beginning. In fact, data exchange is still one of fundamental applications on the Internet according to existing technologies.

Based on the Internet system for data exchange among network users, the P2P network in which there is no central server existing is characteristic of increased data exchange rates when more and more user groups are added. Differing from the conventional concept of efficiency worsened due to more user groups added into the network, the P2P network with low-cost and high-efficiency attributes is popular with the general public in practical applications, for example, Windows 10 updates with P2P technologies integrated for better efficiency.

There have been several patents for data exchange as follows: According to US 7,558,862 B1, a remote access session is established between client and host computers with the assistance of a gateway. The gateway requests the host computer to send a plurality of data packets to different external addresses and monitors the network ports used for these outgoing packets. The gateway then uses the network port information to predict which port the host will use to transmit future outgoing data packets. A similar process is performed on the client computer. The gateway then directs the client computer to send further data packets to the network address and the predicted port of the host computer. Similarly, the host computer is directed to send further data packets to the network address and predicted port of the client computer. The computers are then directly connected together so that further data communications bypass the gateway

Patent No. TW 1471582 discloses "a road-side data exchange network and a method thereof". The road-side data exchange network comprises a plurality of road-side data exchange devices distributed on adjacent road sides. A road-side data exchange device comprises: a positioning system used to receive data from a satellite; a computer used to correct values transmitted from a satellite for generation of analytic data; a database in which analytic data is stored. In the road-side data exchange network, each road-side data exchange device broadcasts analytic data in the database to the databases of all adjacent road-side data exchange devices and provides an electronic device with analytic data.

Patent No. TW 1496496 discloses "method and apparatus for peer-to-peer communications". The method and the apparatus embody network connectivity during a peer-to-peer communications session. The network connectivity is available in a scheduled and/or unscheduled AP connection times/periods. A station (STA) may be configured to negotiate Access Point (AP) Connection times/periods with a peer STA for a direct link which may be on a Basic Service Set (BSS) channel or on a non-BSS channel. Each STA may communicate with AP during the agreed AP Connection times/periods and return to the direct link for peer-to-peer communications.

Patent No. TW 1470992 discloses a VoIP (Voice over Internet Protocol) communications technology for a user-friendly system and platform by which a user can communicate with the customer service staff or an agency providing remote online services and transmit information. The communications system is available to a client side via a network server installed by a service provider and a network browser with no extra application program downloaded, installed or configured; the service staff on a remote side is able to provide a service requester with correct information or receive messages and status of the service requester. In addition to a voice-based interactive session, the peer-to-peer transmission of archive files as supportive instructions or evidences based on the Session Initiation Protocol (SIP) can be enabled for better transmission efficiency and safety with communications created.

Patent No. TW 1433504 discloses a pre-fixed peer-to-peer network on which there are several physical nodes. Several storage tanks are logically divided among the nodes. With encrypted codes erased, the data in data blocks are classified into original and redundant data pieces and further stored in the storage tanks at separate physical nodes on which there is no more than one original and/or redundant data piece. The locations in which the data pieces are stored are organized in a logically virtual node (for example, a super node). Therefore, the super node and the original data blocks can be restored even if some physical nodes fail.

However, except factors such as distance between peers for data exchange and peer-to-peer data transmission, the solutions for failure of data exchange or worse data exchange efficiency on complicated network environment were not discussed in most measures.

Thus, to solve above problems, the present disclosure describes an assistant data transmission method.

### SUMMARY OF THE INVENTION

The problem of the invention is solved by the subject matter of claim 1. Advantageous embodiments are disclosed by the dependent claims. In virtue of the above problems, an assistant data transmission method provided in the present disclosure is a method to correct failure of data exchange at a client side behind a router by adding a middleware server through which network information among a plurality of client sides can be exchanged.

An assistant data transmission method provided in the present disclosure is effective in reducing failure of peer-to-peer data exchange.

An assistant data transmission method provided in the present disclosure increases peer-to-peer data exchange rates.

An assistant data transmission method provided in the present disclosure reduces network safety risks derived from opened ports for peer-to-peer data exchange because of an extra middleware server at which passwords for network connectivity are exchanged.

An assistant data transmission method provided in the present disclosure uses random non-consecutive ports without limitations to add any port at a router.

To this end, an assistant data transmission method is exemplified with major technical measures as follows to serve as background art for understanding the invention. The exemplary assistant data transmission method for the condition of data exchange between client sides behind routers comprises steps as follows: step a: data exchange based on Universal Plug and Play (UPnP) between a first client side at an A1 port of a first router and a second client side at a B1 port of a second router fails; step b: network communications with a middleware server is created by the first client side at an A2 port of the first router and by the second client side at a B2 port of the second router and network communications surveillance is activated by the first client side at an A3 port of the first router and the second client side at a B3 port of the second router; step c: the middleware server transmits received information such as physical network positions and opened external ports of the first router and the second router to the first client side and the second client side; step d: a handshaking procedure for data exchange between the first client side and the second client side is executed by the first client side at the A3 port and the second client side at the B3 port when communications between the first client side at the A2 port and the second client side at the B2 port is unavailable and confirmed by both sides.

An assistant data transmission method is further exemplified with other minor technical measures as follows to serve as background art for understanding the invention. The exemplary assistant data transmission method for the condition of data exchange of a client side behind a router comprises steps as follows: step a: data exchange based on Universal Plug and Play (UPnP) between a first client side at an A1 port of a first router and a second client side at a B1 port fails; step b: network communications with a middleware server is created by the first client side at an A2 port of the first router and by the second client side at a B2 port and network communications surveillance is activated by the first client side at an A3 port of the first router and the second client side at a B3 port; step c: the middleware server transmits received information such as physical network positions and opened external ports of the first router and the second client side to the first client side and the second client side; step d: a handshaking procedure for data exchange between the first client side and the second client side is executed by the first client side at the A3 port and the second client side at the B3 port when communications between the first client side at the A2 port and the second client side at the B2 port is unavailable and confirmed by both sides.

Moreover, an exemplary assistant data transmission method depends on following technical measures to realize purposes and techniques

In the exemplary assistant data transmission method, failure of data exchange based on Universal Plug and Play (UPnP) in step a means data not exchanged in a fixed time interval between the first client side and the second client side.

In the exemplary assistant data transmission method, the A1 port and the A2 port can be the same port.

In the exemplary assistant data transmission method, the B1 port and the B2 port can be the same port.

In the exemplary assistant data transmission method, the A1 port, the A2 port and the A3 port are non-consecutive ports.

In the exemplary assistant data transmission method, the B1 port, the B2 port and the B3 port are non-consecutive ports.

In the exemplary assistant data transmission method, network communications with a middleware server is created by the first client side at the A3 port and by the second client side at the B3 port when communications between the first client side at the A2 port (and the A3 port) and the second client side at the B2 port (and the B3 port) is unavailable and confirmed by both sides after step c.

In the exemplary assistant data transmission method, the middleware server transmits received information such as physical network positions and opened external ports of the first router and the second router to the first client side and the second client side.

In the exemplary assistant data transmission method, a handshaking procedure for data exchange between the first client side and the second client side is executed by the first client side at the A3 port and the second client side at the B3 port when communications between the first client side at the A3 port and the second client side at the B3 port is available and confirmed by both sides.

In the exemplary assistant data transmission method, specific passwords of the first router and the second client side for network connectivity are received by the middleware server in step c.

In the exemplary assistant data transmission method, the specific passwords of the first router and the second client side for network connectivity are authenticated in step d before data exchange between the first client side and the second client side.

In contrast to conventional methods, an assistant data transmission method is effective in: (1) better connectivity rate because of a middleware server at which information is exchanged for re-connection; (2) better compatibility based on an existing communications method; (3) reduced network safety risks by passwords for network connectivity.

### BRIEF DESCRIPTIONS OF THE DRAWINGS

FIG. 1 is the first flowchart for an assistant data transmission method in a preferred embodiment;
FIG. 2 is the second flowchart for an assistant data transmission method in a preferred embodiment;
FIG. 3 is the third flowchart for an assistant data transmission method in a preferred embodiment;
FIG. 4 is the fourth flowchart for an assistant data transmission method in a preferred embodiment;
FIG. 5 is the first schematic view of an assistant data transmission method in a preferred embodiment;
FIG. 6 is the second schematic view of an assistant data transmission method in a preferred embodiment;
FIG. 7 is the third schematic view of an assistant data transmission method in a preferred embodiment;
FIG. 8 is the fourth schematic view of an assistant data transmission method in a preferred embodiment;
FIG. 9 is the fifth schematic view of an assistant data transmission method in a preferred embodiment;
FIG. 10 is the sixth schematic view of an assistant data transmission method in a preferred embodiment;
FIG. 11 is the seventh schematic view of an assistant data transmission method in a preferred embodiment;
FIG. 12 is the eighth schematic view of an assistant data transmission method in a preferred embodiment;
FIG. 13 is the ninth schematic view of an assistant data transmission method in a preferred embodiment;
FIG. 14 is the tenth schematic view of an assistant data transmission method in a preferred embodiment.

### DETAILED DESCRIPTIONS OF THE PREFERRED EMBODIMENTS

An assistant data transmission method will be further illustrated in preferred embodiments for clear understanding of purposes, characteristics and effects:

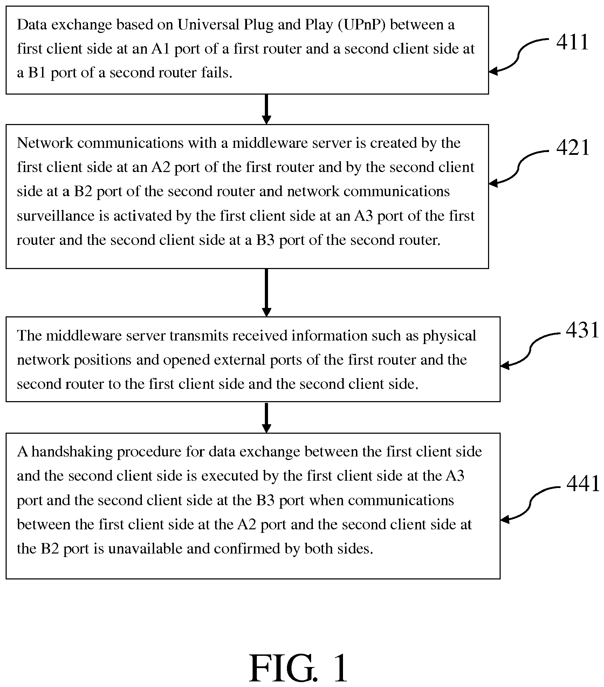

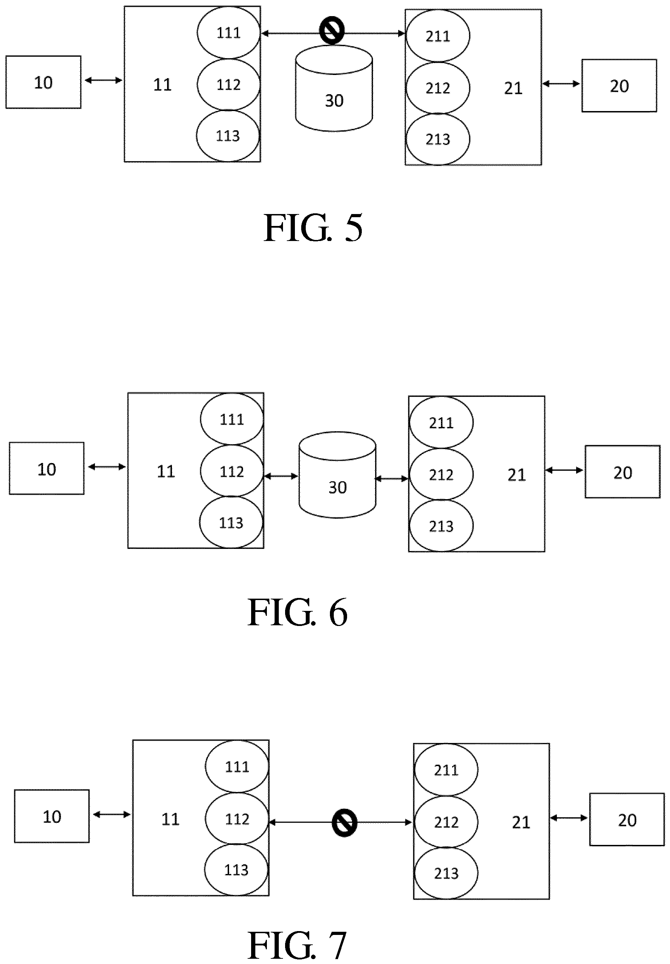

FIGS. 1, 5, 6, 7 and 10 illustrate an assistant data transmission method in the first embodiment. As shown in FIG. 5, a first router (11) comprises an A1 port (111), an A2 port (112) and an A3 port (113) and a second router (21) comprises a B1 port (211), a B2 port (212) and a B3 port (213); as shown in step a (411) in FIG. 1, data cannot be exchanged between Universal Plug and Play (UPnP) devices, that is, between the A1 port (111) of the first router (11) for a first client side (10) and the B1 port (211) of the second router (21) for a second client side (20).

Specifically, as a telecommunications network device with two important mechanisms of routing and forwarding, the first router (11) or the second router (21) is able to decide a transmission route of packets from a source to a destination and from a router's input port to the router's appropriate output port for main applications such as Network Address Translation (NAT, a technology of rewriting a source IP address or a destination IP address with IP packets passing through a router or a firewall) to share more than one IPv4 (Internet Protocol version 4) address; A1 port (111), A2 port (112), A3 port (113), B1 port (211), B2 port (212) and B3 port (213) are TCP/UDP ports (Transmission Control Protocol/User Datagram Protocol ports) which can be specifically mapped between both connected sides.

In an assistant data transmission method, the failure of data exchange based on Universal Plug and Play (UPnP) means data is not exchanged in a fixed time interval between the first client side (10) and the second client side (20). In detail, an ordinary router with the Universal Plug and Play (UPnP) function allows packets to pass through the router or a firewall freely for Network Address Translation (NAT) without user interaction; in virtue of the safety issue, packets should be filtered by a router, for example, a port is specifically available to some packets for a specific Internet Protocol (IP) address only. Because most peers on the peer-to-peer (P2P) network, the most popular network for data exchange, have two roles of the user side and the server side simultaneously, a peer for which network connectivity has been created needs to open a new port for another peer. However, due to the new TCP/IP address differing from the original TCP/IP address, the network connectivity for another peer rejected by a router leads to failure of data exchange finally.

Referring to step b (421) in FIG. 1 and FIG. 6, which illustrate network communications with a middleware server (30) by the first client side (10) at an A2 port (112) of the first router (11) and by the second client side (20) at a B2 port (212) of the second router (21) and network communications surveillance of the first client side (10) at an A3 port (113) of the first router (11) and of the second client side (20) at a B3 port (213) of the second router (21); referring to step c (431) in FIG. 1, which illustrates information such as individual physical network positions and opened external ports of the first router (11) and the second router (21) is received by the middleware server (30) first and further transmitted to the first client side (10) and the second client side (20).

In practice, the first client side (10) or the second client side (20) is an electronic device for network communications and data storage/exchange/processing such as desktop computer, laptop computer or handheld device; in the assistant data transmission method, the first router (11) (the second router (21)) electronically communicates with the first client side (10) (the second client side (20)) via a wireless or wired network; the middleware server (30) is characteristics of roles of a client side and a server side in a peer-to-peer (P2P) network, particularly delivery of information such as physical network position and opened external port at each peer, so that a port opened or to be opened is provided to a safe new connection by each router side without traditional drawbacks of no new connection at a peer allowed by a router side or a new port opened additionally due to any safety issue.

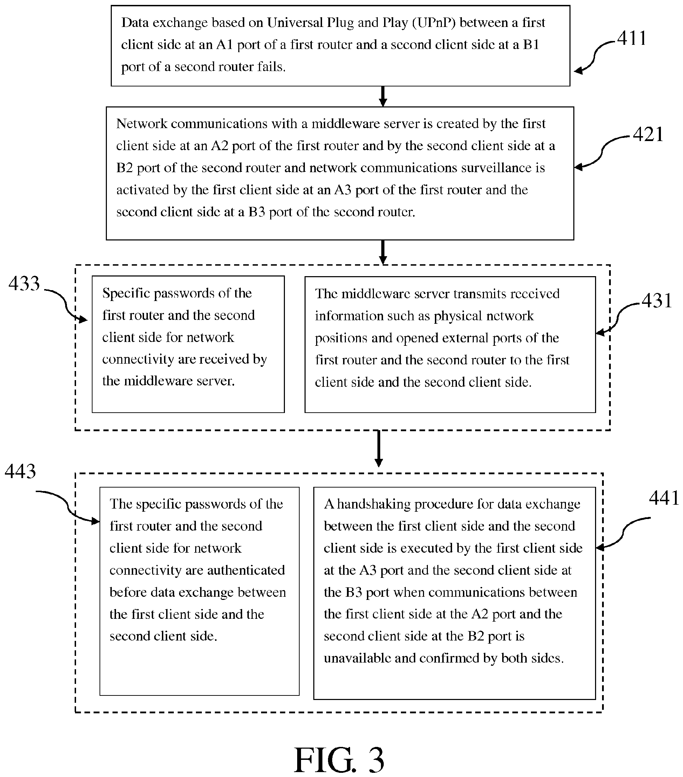

Preferably, as shown in FIG. 3, step c2 (433) is added after step c (431). According to step c2 (433), the middleware server (30) acquires passwords for connections to the first router (11) and the second client side (20) and give information such as individual physical network position and opened external port to both the first client side (10) and the second client side (20).

Referring to step d (441) in FIG. 1 and FIGS. 7 and 10, which illustrate a handshaking procedure for data exchange between the first client side (10) and the second client side (20) is executed by the first client side (10) at the A3 port (113) and the second client side (20) at the B3 port (213) when communications between the first client side (10) at the A2 port (112) and the second client side (20) at the B2 port (212) is unavailable and confirmed by both sides.

In general, FIG. 7 illustrates communications unavailable between the first client side (10) at the A2 port (112) and the second client side (20) at the B2 port (212) are confirmed by both sides; furthermore, as shown in FIG. 7, the communications, which is available between the first client side (10) at the A2 port (112) and the second client side (20) at the B2 port (212) as expected and confirmed by both sides, is terminated. However, different from the condition of step d (441) in FIG. 1, the first client side (10) at the A3 port (113) and the second client side (20) at the B3 port (213), both of which confirm communications available as shown in FIG. 7, execute a handshaking procedure and exchange data of the first client side (10) at the A3 port (113) and the second client side (20) at the B3 port (213) for a better peer-to-peer data exchange rate.

In detail, information such as opened external ports and physical network locations of the A2 port (112) and the B2 port (212) is available to the first client side (10) and the second client side (20) in step c (431); in practice, the first client side (10) (the second client side (20)) behind the first router (11) (the second router (21)) learns of an internal port rather than an external port activated at a physical network location (for example, the A3 port (113) or the B3 port (213)) unless the external port is contacted. In general, the A2 port (112) mapping to an internal port 50000 is port 5800, the A3 port (113) mapping to an additionally added internal port 50002 is port 5802 (a port number from 5802 to 5822 specifically), and so on. Therefore, the B3 port (213) and the A3 port (113) can be deduced from the B2 port (212) and the A2 port (112) by the first client side (10) and the second client side (20), respectively.

Next, the first client side (10) exchanges data with the second client side (20) through the A3 port (113) of the first router (11); the second client side (20) exchanges data with the first client side (10) through the B3 port (213) of the second router (21). As such, data exchange is executed by the first client side (10) and the second client side (20).

Preferably, the A1 port (111), the A2 port (112), the A3 port (113), the B1 port (211), the B2 port (212) and the B3 port (213) are non-consecutive ports without limitations of safety specifications of each router. For safety of each client side linking another client side, step d2 (443), which is used to check a specific password prior to data exchange between the first client side (10) and the second client side (20) in the assistant data transmission method, is added before step d (441) as shown in FIG. 3.

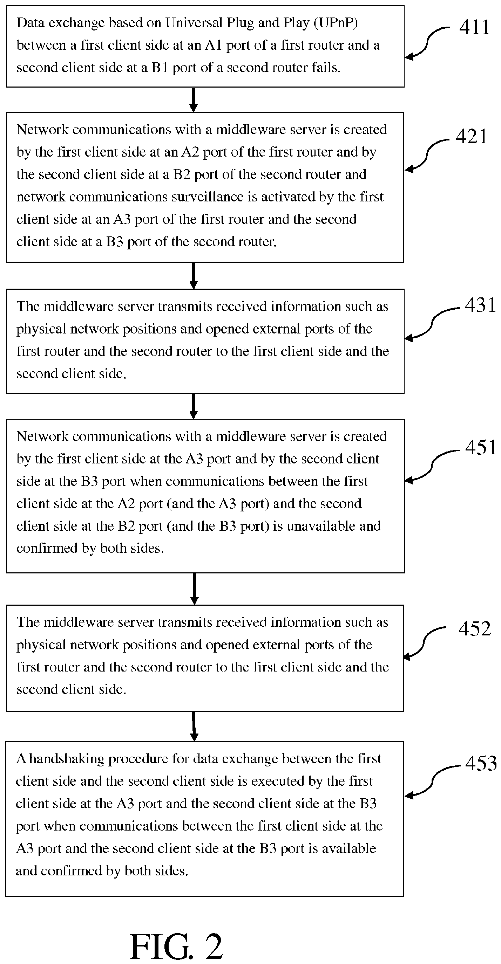

Referring to FIGS. 2, 5, 6, 7, 8, 9 and 10 that illustrate an assistant data transmission method in the second embodiment in which the symbols identical to those of the first embodiment in FIGS. 1, 5, 6, 7 and 10 are not explained hereinafter. For a better peer-to-peer data exchange rate, the differences in the second embodiment differing from the first embodiment are extra steps, step e (451), step e1 (452) and step e2 (453), for conditions of communications unavailable between the first client side (10) at the A3 port (113) and the second client side (20) at the B3 port (213) and confirmed by both sides in addition to the initial condition of communications unavailable between the first client side (10) at the A2 port (112) and the second client side (20) at the B2 port (212) and confirmed by both sides, as shown in step d (441) in the first embodiment.

First of all, step a (411), step b (421) and step c (431) in FIG. 2 are not changed and described in FIG. 1.

Next, referring to step e (451) in FIG. 2 and FIGS. 7, 8 and 9, which illustrate network communications with a middleware server (30) is executed by the first client side (10) at the A3 port (113) and by the second client side (20) at the B3 port (213) when communications between the first client side (10) at the A2 port (112) (and the A3 port (113)) and the second client side (20) at the B2 port (212) (and the B3 port (213)) is unavailable and confirmed by both sides.

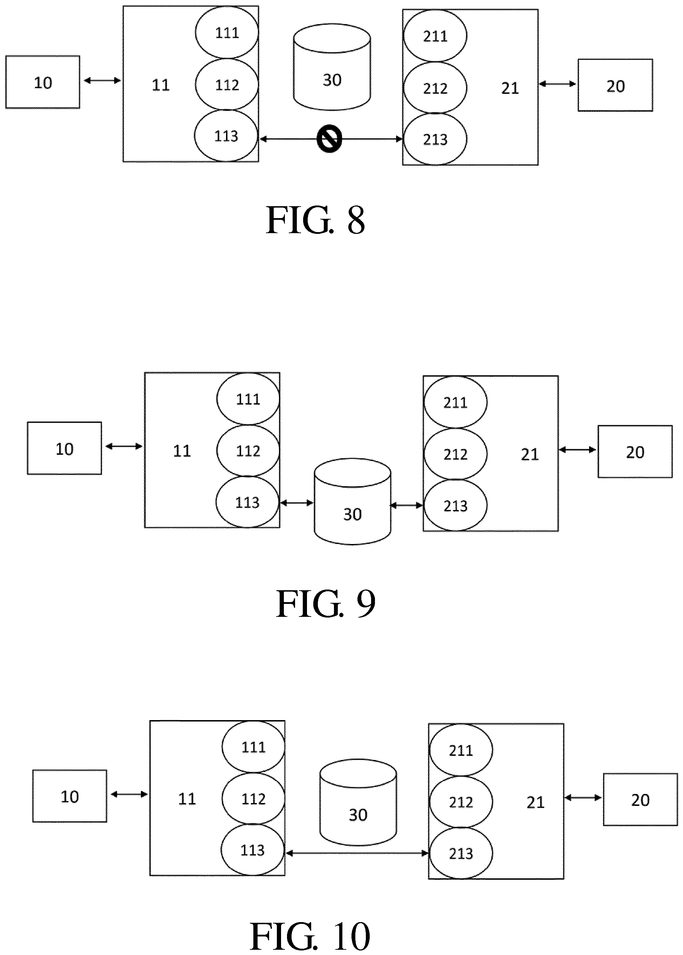

Moreover, referring to step e1 (452) in FIG. 2 and FIG. 9, which illustrate the middleware server (30) transmits received information such as physical network locations and opened external ports of the first router (11) and the second router (21) to the first router (11) and the second router (21).

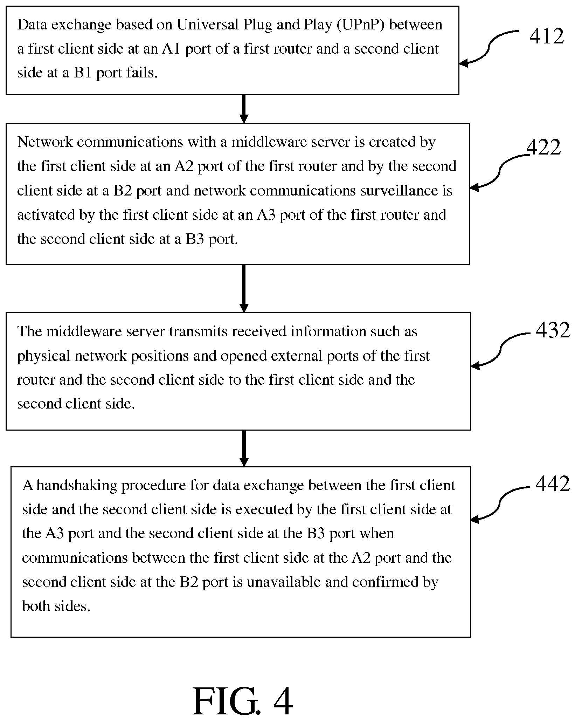

Finally, referring to step e2 (453) in FIG. 4 and FIG. 10, which illustrate a handshaking procedure for data exchange between the first client side (10) and the second client side (20) is executed by the first client side (10) at the A3 port (113) and the second client side (20) at the B3 port (213) when communications between the first client side (10) and the second client side (20) is available and confirmed by both sides.

In practice, a connection between the first client side (10) at the A3 port (113) and the second client side (20) at the B3 port (213) in which communications has been recorded by the first router (11) and the second router (21) is rejected because of safety not confirmed; next, information of the A3 port (113) and the B3 port (213) is exchanged through the middleware server (30) in step e1 (452); finally, data exchange is activated in step e2 (453) normally with safety confirmed in step e1 (452) in which communications between the A3 port (113) and the B3 port (213) has been recorded by the first router (11) and the second router (21).

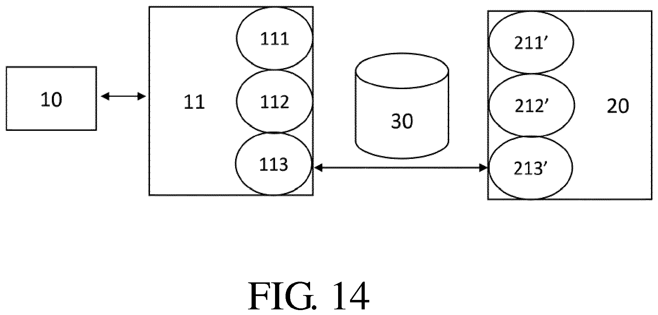

Referring to FIGS. 4, 11, 12, 13 and 14 that illustrate an assistant data transmission method in the third embodiment in which the symbols identical to those of the first embodiment in FIGS. 1, 5, 6, 7 and 10 are not explained hereinafter. The difference in the third embodiment differing from the first embodiment is no second router (21) because a connection of the second client side (20) to the outside is not created through the second router (21).

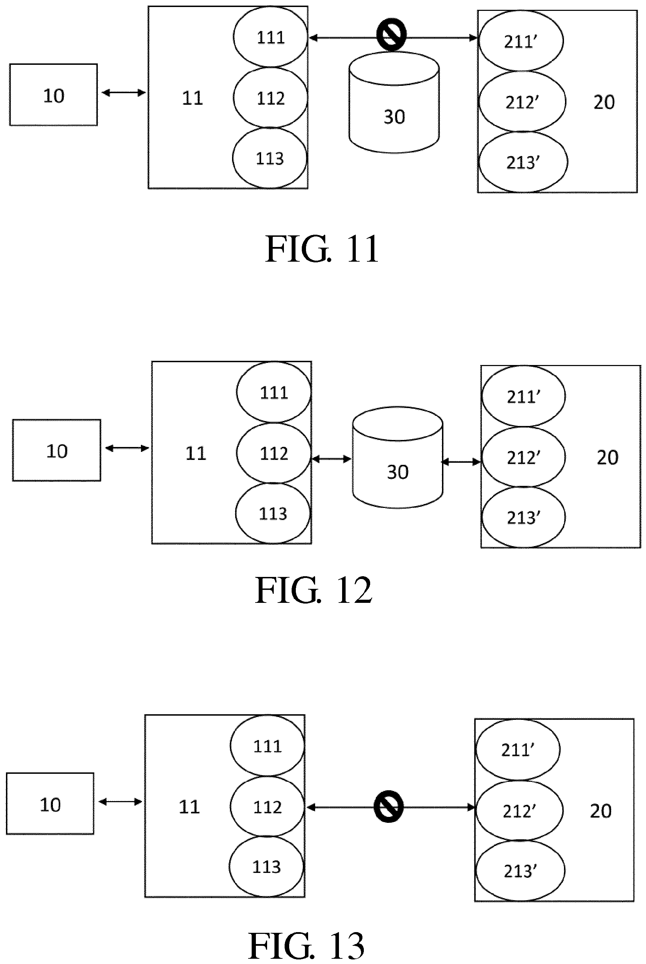

Referring to step a1 (412) in FIG. 4 and FIG. 11, which illustrate a failure of data exchange between a first client side (10) at an A1 port (111) of a first router (11) and a second client side (20) at B1 port (211') based on Universal Plug and Play (UPnP) technology.

Next, referring to step b1 (422) in FIG. 4 and FIG. 12, which illustrate network communications with a middleware server (30) by the first client side (10) at an A2 port (112) of the first router (11) and by the second client side (20) at a B2 port (212').

Furthermore, referring to step c1 (432) in FIG. 4 and FIG. 12, which illustrate the middleware server (30) transmits received information such as physical network locations and opened external ports of the first router (11) and the second client side (20) to the first client side (10) and the second client side (20).

Finally, referring to step d1 (442) in FIG. 4 and FIG. 13, which illustrate information of the first client side (10) and the second client side (20) is exchanged between the first router (11) at an A3 port (113) and the second client side (20) at a B3 port (213')

Preferably, the A1 port (111), the A2 port (112), the A3 port (113), the B1 port (211'), the B2 port (212') and the B3 port (213') in the assistant data transmission method are non-consecutive ports without limitations of safety specifications of each router.

The details to execute an assistant data transmission method are explained in a preferred embodiment as follows:
Referring to step a (411) in FIG. 3 and FIG. 5, which illustrates data exchange is not activated in a fixed time interval between the first client side (10) at the A1 port (111) of the first router (11) and the second client side (20) at the B1 port (211) of the second router (21) based on the Universal Plug and Play (UPnP) protocol and the network address translation protocol.

Next, as shown in step b (421) in FIG. 3 and FIG. 6, network communications with a middleware server (30) is created by the first client side (10) at the A2 port (112) of the first router (11) and by the second client side (20) at the B2 port (212) of the second router (21) and network communications surveillance is activated by the first client side (10) at the A3 port (113) of the first router (11) and the second client side (20) at the B3 port (213) of the second router (21); referring to step c (431) in FIG. 3, which illustrates the middleware server (30) transmits received information such as physical network locations and opened external ports of the first router (11) and the second router (21) to the first client side (10) and the second client side (20).

Furthermore, referring to step e (451) in FIG. 3 and FIGS. 7, 8 and 9, which illustrate: communications between the first client side (10) at the A2 port (112) and the second client side (20) at the B2 port (212) is unavailable and confirmed by both sides; communications between the first client side (10) at the A3 port (113) and the second client side (20) at the B3 port (213) is unavailable and confirmed by both sides; network communications with a middleware server (30) is created by the first client side (10) at the A3 port (113) and by the second client side (20) at the B3 port (213), respectively.

Finally, referring to step e1 (452) and step e2 (453) in FIG. 3 and FIGS. 9 and 10, which illustrate: the middleware server (30) transmits received information such as physical network locations and opened external ports of the first router (11) and the second router (21) to the first client side (10) and the second client side (20); a handshaking procedure for exchange of information of the first client side (10) and the second client side (20) is activated between the first client side (10) at the A3 port (113) and the second client side (20) at the B3 port (213) when communications between the first client side (10) and the second client side (20) is available and confirmed by both sides.

Accordingly, an assistant data transmission method differing from ordinary P2P data exchange and referred to as creative work meets patentability and is applied for the patent.

It should be reiterated that the above descriptions present the preferred embodiment, and any equivalent change in specifications, claims, or drawings still belongs to the technical field within the present disclosure with reference to claims hereinafter.

## Claims

1. An assistant data transmission method for data exchange between client sides behind routers comprising steps as follows:
step a: data exchange between a first client side (10) at an A2 port (112) of a first router (11) and a second client side (20) at a B2 port (212) of the second client side (20) or of a second router (21) is terminated, wherein the A2 port (112) and B2 port (212) are TCP/UDP ports which can be specifically mapped between both connected sides; and a B3 port (213) of the second client side (20) or of the second router (21) is deduced by the first client side (10) based on the B2 port (212) and an A3 port (113) of the first router (11) is deduced by the second client side (20) based on the A2 port (112);
step b: network communications with a middleware server (30) are executed by the first client side (10) at the A3 port (113) and by the second client side (20) at the B3 port (213) when communication between the first client side (10) at the A2 port (112) and the second client side (20) at the B2 port (212) is terminated, and communication between the first client side (10) at the A3 port (113) and the second client side (20) at the B3 port (213) is unavailable;
step c: the middleware server receives and transmits information about physical network positions and opened external ports of the first router (11) and the second router to the first client side (10) or the first router (11) and to the second client side (20) or the second router (21);
step d: a handshaking procedure for data exchange between the first client side (10) and the second client side (20) is executed by the first client side (10) at the A3 port (113) and the second client side (20) at the B3 port (213) when communication between the A3 port (113) and the B3 port (213) is available.

2. An assistant data transmission method as claimed in claim 1 wherein termination of data exchange based on Universal Plug and Play, UPnP, in step a means data not exchanged in a fixed time interval between the first client side (10) and the second client side (20).

3. An assistant data transmission method as claimed in claim 1 wherein the A2 port (112) and the A3 port (113) are non-consecutive ports.

4. An assistant data transmission method as claimed in claim 1 wherein the B2 port (212) and the B3 port (213) are non-consecutive ports.

## Patentansprüche

1. Eine Methode zur Assistent-Datenübertragung für die Datenübertragung zwischen den Client-Seiten hinter den Routern, die die folgenden Schritte umfasst:
Schritt a: ein Datenaustausch zwischen einer ersten Client-Seite (10) an einem A2-Port (112) eines ersten Routers (11) und einer zweiten Client-Seite (20) an einem B2-Port (212) der zweiten Client-Seite (20) oder eines zweiten Routers (21) beendet wurde, wobei der A2-Port (112) und der B2-Port (212) TCP/UDP-Ports sind, die speziell zwischen beiden verbundenen Seiten abgebildet werden können; und ein B3-Port (213) der zweiten Client-Seite (20) oder des zweiten Routers (21) durch die erste Client-Seite (10) aufgrund des B2-Ports (212) und ein A3-Port (113) des ersten Routers (11) durch die zweite Client-Seite (20) aufgrund des A2-Ports (112) abgeleitet werden;
Schritt b: Die Netzwerkkommunikationen mit einem Middleware-Server (30) durch eine erste Client-Seite (10) am A3-Port (113) und durch die zweite Client-Seite (20) am B3-Port (213) vorgenommen werden, wenn die Kommunikation zwischen der ersten Client-Seite (10) am A2-Port (112) und der zweiten Client-Seite (20) am B2-Port (212) beendet wird, wobei die Kommunikation zwischen der ersten Client-Seite (10) am A3-Port (113) und der zweiten Client-Seite (20) am B3-Port (213) nicht verfügbar ist;
Schritt c: Der Middleware-Server empfängt und überträgt die Informationen über die Positionen des physischen Netzwerks und über die externen Ports, die zwischen dem ersten Router (11) und dem zweiten Router zur ersten Client-Seite (10) oder dem ersten Router (11) und zur zweiten Client-Seite (20) oder dem zweiten Router (21) geöffnet wurden;
Schritt d: ein Handshake-Verfahren für den Datenaustausch zwischen der ersten Client-Seite (10) und der zweiten Client-Seite (20), die von der ersten Client-Seite (10) am A3-Port (113) und der zweiten Client-Seite (20) am B3-Port (213) vorgenommen wird, wenn die Kommunikation zwischen dem A3-Port (113) und dem B3-Port (213) verfügbar ist.

2. Eine Methode zur Assistent-Datenübertragung nach Anspruch 1, wobei der Datenaustausch aufgrund des Universal Plug and Plays, UpnP beendet wird; der Schritt a bedeutet, dass die Daten zwischen der ersten Client-Seite (10) und der zweiten Client-Seite (20) nicht innerhalb eines festen Zeitintervalls ausgetauscht werden.

3. Eine Methode zur Assistent-Datenübertragung nach Anspruch 1, wobei der A2-Port (112) und der A3-Port (113) keine aufeinanderfolgende Ports sind.

4. Eine Methode zur Assistent-Datenübertragung nach Anspruch 1, wobei der B2-Router (212) und der B3-Port (213) keine aufeinanderfolgende Ports sind.

## Revendications

1. Une méthode d'aide à la transmission de données pour l'échange de données entre les cotés client, comprenant les étapes suivantes :
étape a : un échange de données entre un premier côté client (10) sur un port A2 (112) d'un premier routeur (11) et un second côté client (20) sur un port B2 (212) d'un second côté client (20) ou d'un second routeur (21) est terminé, dans lequel le port A2 (112) et le port B2 (212) sont des ports TCP / UDP qui peuvent être spécifiquement cartographiés entre les deux côtés connectés ; et un port B3 (213) du second côté client (20) ou du deuxième routeur (21) est déduit par le premier côté client (10) sur la base du port B2 (212) et un port A3 (113) du premier routeur (11) est déduit par le second côté client (20) sur la base du port A2 (112) ;
étape b : des communications réseau avec un serveur intergiciel (30) sont exécutées par le premier côté client (10) sur le port A3 (113) et par le second côté client (20) sur le port B3 (213) lorsque la communication entre le premier client (10) sur le port A2 (112) et le second côté client (20) sur le port B2 (212) est terminée, et la communication entre le premier côté client (10) sur le port A3 (113) et du second client (20) sur le port B3 (213) est indisponible ;
étape c : un serveur intergiciel reçoit et transmet des informations sur les positions physiques du réseau et les ports externes ouverts sur le premier routeur (11) et le deuxième routeur au premier côté client (10) ou au premier routeur (11) et au deuxième côté client (20) ou au deuxième routeur (21) ;
étape d : une procédure de prise de contact pour l'échange de données entre le premier côté client (10) et le second côté client (20) exécutée par le premier côté client (10) sur le port A3 (113) et le second côté client (20) sur le port B3 (213) lorsque la communication entre le port A3 (113) et le port B3 (213) est disponible.

2. Une méthode d'aide à la transmission de données selon la revendication 1, dans laquelle la fin de l'échange de données est basé sur le système Universel Prêt à l'Emploi (UPnP), ce qui veut dire qu'à l'étape a, les données ne sont pas échangées dans un intervalle de temps fixe entre le premier côté client (10) et le second côté client (20).

3. Une méthode d'aide à la transmission de données selon la revendication 1, dans laquelle le port A2 (112) et le port A3 (113) sont des ports non consécutifs.

4. Une méthode d'aide à la transmission de données selon la revendication 1, dans laquelle le port B2 (212) et le port B3 (213) sont des ports non consécutifs.
